## Europäisches Patentamt

### European Patent Office

### Office européen des brevets

(19)

(11) Veröffentlichungsnummer: **0 047 794**
**B1**

(12) # EUROPÄISCHE PATENTSCHRIFT

(45) Veröffentlichungstag der Patentschrift:
**06.07.83**

(21) Anmeldenummer: **80105525.2**

(22) Anmeldetag: **15.09.80**

(51) Int. Cl.³: **B 01 J 13/02,** B 01 J 2/16,
B 05 B 13/00, B 01 J 8/24

(54) **Verfahren zur gleichmässigen, geschlossenen Oberflächenbeschichtung einzelner Körner von rieselfähigen Gütern und Vorrichtung zu seiner Durchführung.**

(43) Veröffentlichungstag der Anmeldung:
**24.03.82 Patentblatt 82/12**

(45) Bekanntmachung des Hinweises auf die Patenterteilung:
**06.07.83 Patentblatt 83/27**

(84) Benannte Vertragsstaaten:
**AT BE CH FR GB IT LI LU NL SE**

(56) Entgegenhaltungen:
**CH-A-391 664**
**DE-A-1 942 243**
**FR-A-2 342 763**
**US-A-3 110 626**
**US-A-3 411 480**

(73) Patentinhaber: **Saat- und Erntetechnik GmbH.,
Strassburgerstrasse 2 Postfach 748, D-3440 Eschwege
(DE)**

(72) Erfinder: **Hörner, Ernst Ludwig, Dipl.-Ing.,
Schindeleich 10, D-3440 Eschwege (DE)**
Erfinder: **Knolle, Jürgen Christian, Amselweg 11,
D-3440 Eschwege (DE)**
Erfinder: **Grimm, Hans, Dr., Ringstrasse 11,
D-3446 Meinhard 1 (DE)**

(74) Vertreter: **Jahn-Held, Wilhelm W., Dr.Dr.-Ing. Dipl.Chem.,
Schöne Aussicht 8, D-3513 Staufenberg-Landwehrhagen
(DE)**

## Verfahren zur gleichmäßigen, geschlossenen Oberflächenbeschichtung einzelner Körner von rieselfähigen Gütern und Vorrichtung zu seiner Durchführung

Die Oberflächenbeschichtung von körnigen Gütern ist eine Aufgabe der Technik. Diese Beschichtung erfolgt im allgemeinen in rotierenden Behältern. Diese haben den Nachteil erheblicher Reibung der zu beschichtenden Körner. Sofern keine ausreichende Zwischentrocknung erfolgt, können Verklebungen zur Bildung von Agglomeraten und zur Verklumpung der Masse führen.

Es ist auch die Beschichtung im Wirbelbett bekannt. Dieses hat den erheblichen Nachteil, daß ein gleichmäßiges Wirbelbett mit einheitlicher Volumenkonzentration nur schwierig einzuhalten ist. Die Arbeitsweise solcher Wirbelbetten führt deshalb oft zu Betriebsstörungen.

Ein weiterer Nachteil liegt in der Schwierigkeit, die einzusprühende Stoffmenge genau zu dosieren, um eine gleichmäßige Verteilung auf dem zu beschichtenden Gut zu erreichen.

Es ist auch die einzuführende Luftmenge für die notwendige, rasche Antrocknung der eingesprühten Feststoffe zu gering, so daß Verbackungen der zu beschichtenden Körner nicht zu vermeiden sind. Es entstehen dadurch unerwünschte Granulate der zu beschichtenden Körner und somit auch kein gleichmäßiges, beschichtetes Gut.

Derartige Wirbelbetten sind auch nicht in Zonen unterschiedlicher Funktion eingeteilt, wie in eine Kernzone und in eine Randzone. Es besteht vielmehr eine gleiche Druckverteilung im gesamten Wirbelquerschnitt.

Diese Nachteile werden für die Oberflächenbeschichtungen körniger Güter nach dem Verfahren der Erfindung mit der Vorrichtung zu seiner Durchführung vermieden.

Der Stand der Technik verwendet das »Wirbelbett« zur Granulation. Die DE-A-1 792 752 betrifft ein Verfahren zur fortlaufenden Herstellung von Agglomeraten. Das zu agglomerierende Gut soll in einer Wirbelschicht durch Dampfschwaden aus Naßdampf fallen. Die Vorrichtung besteht aus einem zylindrischen Rohr, welches durch eine Schleuse am unteren Ende abgeschlossen ist.

Weder diese andere Aufgabe noch diese geometrisch anders gestaltete Vorrichtung hat das Verfahren und die Vorrichtung gemäß der Erfindung nahegelegt. Die DE-C-2 341 504 betrifft ein Verfahren zur Wirbelschichtsprühgranulation. Es soll Luft über einen Siebboden eingeblasen und das mit einer eingedüsten Flüssigkeit gebildete Granulat durch Schlagarme mit hoher Geschwindigkeit zerschlagen werden. Auch diese Vorrichtung verwendet einen zylindrischen Wirbelraum mit einheitlichem Druck. Auch dieser Stand der Technik hat von der Lehre der Erfindung weggeführt, da dieses gerade keinen einheitlichen Druckraum, sondern Zonen verschiedenen Strömungsdruckes, verwendet.

Die DE-A-2 361 998 macht ein Verfahren und eine Vorrichtung zur kontinuierlichen Herstellung von Granulaten in der Wirbelschicht bekannt. Es soll die Granulatbildung in Teilvorgängen in Raumteilungselementen in Form getrennter Zellen unter Aufwirbelung und Zerstäuben der fluiden Medien erfolgen. Dieser Stand der Technik ist einen völlig anderen Weg gegangen, da die Teilvorgänge in getrennten Räumen nacheinander erfolgen. Dieser Vorschlag gestattet gerade nicht, eine Beschichtung ohne eine Agglomeration der Granulate durchzuführen.

Die DE-A-2 415 586 betrifft ein Verfahren und Vorrichtung zur Sintergranulation und Wärmebehandlung von Schüttgut in der Wirbelschicht. Die zylindrische Granuliervorrichtung soll einen Wirbelboden verwenden, dessen Öffnungen für die Erzeugung der Wirbelschicht den Durchgang des Granulates gestatten. Es soll dadurch ein oberer Grenzwert des Produktes aus Korngröße mal Dichte erreicht werden.

Auch diese Lehre der Technik berührt das Verfahren der Erfindung und die Vorrichtung zu seiner Durchführung mit keinem Parameter. Die DE-A-2 418 552 betrifft die Herstellung eines Granulates im Wirbelbett. Die Lösung dieser Aufgabe gibt keine eindeutige Regel zum technischen Handeln. Es sollen kornzerteilende Kräfte so groß gewählt werden, daß im Wirbelbett der Anteil der Granulate mit Unterkorn nur 5 bis 15% beträgt. Diese Kräfte sollen so gerichtet werden, daß diese Teilchen aus dem Wirbelbett herausschleudern bis in den Sprühbereich. Die Vorrichtung ist so ausgebildet, daß die Wirbelung durch Schlagrührer erfolgt, die auf einer Mittellinie im Winkel von 30° angeordnet sind. Zur Umlenkung der Teilchen ist unter jedem Schlagrührer ein Leitblech angeordnet. Die Granulierkammer bildet einen Kegelstumpf mit Luftzufuhr über einen Siebboden. Ab oberen Ende ist ein zylindrischer Entstaubungsraum mit Staubfilter angeschlossen. Der technische Effekt der Granulation soll darauf beruhen, daß das eingesprühte Material oberhalb der Wirbelzone angelagert und in dieser nur getrocknet wird.

Auch dieses Granulierverfahren berührt das Verfahren der Erfindung nicht. Dieses Verfahren erzeugt ein Wirbelbett mit mechanischen Kräften. Die Sprühzone liegt oberhalb der Trocknungszone. Der trichterförmige Kegelstumpf hat völlig andere Funktionen, nämlich die Sprühzone zu erweitern. Dieses Verfahren und diese Vorrichtung lehren nicht, die Vorrichtung so auszubilden, daß diese eine Kernzone und eine Randzone ausbildet. Dieses Verfahren lehrt nicht, in hoher Volumenkonzentration in der Kernzone zu arbeiten. Es findet auch kein Einsprühen unter gleichzeitigem Antrocknen einer Beschichtung statt.

Diese Lehre ist also einen anderen Weg gegangen. Die DE-A-2 643 121 betrifft ein »Fluidisierungs-Granulierverfahren« und eine Vorrichtung zur Durchführung. Es soll abwechselnd ein Sprühvorgang und ein Trocknungsvorgang stattfinden. Der Sprühzyklus soll so lange erfolgen, bis die Teilchen bis 50% Flüssigkeitsgehalt erreicht haben und der Trocknungszyklus soll bis zur vollständigen Trocknung erfolgen.

Die Ausbildung der Vorrichtung betrifft die automatische Steuervorrichtung zur Durchführung der Zyklen. Es wird auch noch eine Filterschüttelstufe dazwischen geschaltet.

Diese Granuliervorrichtung hat die Maßnahmen und Merkmale der Erfindung nicht nahegelegt und ist einen anderen Weg gegangen. Eine gezielte Beschichtung läßt sich mit dieser Arbeitsweise nicht durchführen, da die Teilchen bereits in der Sprühzone agglomerieren und erst danach trocknen.

Die DE-A-2 851 627 schlägt in jüngster Zeit ein Verfahren zur Agglomeration pulverförmiger Feststoffe in einem wäßrigen Medium vor. Der Feststoff ist pulverförmig und soll in einem Gasstrom pneumatisch gefördert werden, dabei soll das Versprühen des wäßrigen Mediums erfolgen. Wesentlich ist, daß diese Komponenten bis zur Agglomeration in dem Gasraum verbleiben, danach aus der Sprühzone genommen werden. Die als zylindrischer Behälter mit einer konischen Abzugsstrecke ausgebildete Vorrichtung zeigt keine Weiterentwicklung des Standes der Technik. Die DE-A-2 317 129 betrifft einen Zweiphasengranulator. Dieser ist als zylindrischer Behälter mit seitlichem Eintritt der Luft am Rande der Bodenplatte ausgebildet. Der Behälter soll zur Bildung eines Luftspaltes von dem Bodenteil abhebbar sein. Bei geschlossenem Behälter soll agglomeriert werden. Ein mechanisches Rührwerk mit Zerhackerwerk soll auf dem Behälterboden einen Mischeffekt ergeben.

Danach soll über den Luftspalt Warmluft zum Trocknen eingeführt werden. Dieses Verfahren und diese Vorrichtung sind einen anderen Weg gegangen, der von der Lehre der Erfindung wegführt. Es wird eine einheitliche Druckzone verwendet und die Behandlung und die Trocknung nacheinander durchgeführt.

Die DE-A-2 551 578 betrifft einen Granulator. Dieser ist als zylindrischer Behälter ausgebildet. Ein Rührwerk soll den Lufteintrittsraum von dem Granuliergut freihalten. Diese Vorrichtung mit einer Wirbelzone hat das Verfahren gemäß der Erfindung und die Vorrichtung zu seiner Durchführung nicht nahegelegt.

Die DE-B-1 109 715 betrifft ein mehrstufiges Verfahren zur Herstellung von Düngemittel-Schichtgranalien.

Dieses Verfahren lehrt, zunächst aus mehlförmigen Phosphat-Komponenten einen Kern von 1 bis 3 mm durch Granulation zu bilden. Dieser Kern soll mit wasserlöslichen Phosphaten weitergranuliert werden bis die Außenschicht 40 bis 99% beträgt.

Dieses Verfahren ist ein reines Granulierverfahren, welches in 2 Stufen granuliert, z. B. zunächst auf 2 mm und danach mit der wasserlöslichen Schicht auf 5 mm. Beide Schichten des Granulates bestehen aus Phosphat-Komponenten. Eine Vorrichtung zur Durchführung dieser Schichtgranulation wird nicht offenbart.

Die DE-A-1 592 680 betrifft ein Verfahren mit Vorrichtung zum Trocknen, Verfestigen, Umhüllen und Kühlen von Düngemitteln. Es sollen Teilchen von Düngemitteln in ein Pulver-Gasgemisch mit pulverförmigem Umhüllungsmaterial eingeführt werden, wobei gleichzeitig getrocknet, abgekühlt, verfestigt und umhüllt werden soll. Die Vorrichtung besteht aus einem Behälter, der durch eine perforierte Trennwand in eine obere und eine untere Kammer eingeteilt ist. Beide Räume sind fast vollständig mit dem zu behandelnden Gut gefüllt, durch welches Luft geblasen wird. Die Zerteilung des Gutes wird durch eine Zerteilvorrichtung bewirkt. Diese Vorrichtung kann nicht als Wirbelbett bezeichnet werden, in der eine Wirbelung der Masse im Luft- und Flüssigkeitsstrom erfolgt. Dieses Verfahren und diese Vorrichtung führt von der Lehre der Erfindung weg.

Die DE-A-1 937 424 betrifft ein Verfahren zum Überziehen feinverteilter Feststoffteilchen. Die Feststoffteilchen sollen unter Bildung einer Teilchen-Wirbelschicht belüftet werden. Die Wirbelschicht soll eine rotierende Bewegung um eine vertikale Achse bilden. Es soll ein verfestigender Überzug in Form eines Flüssigkeitssprühnebels aufgesprüht werden. Die Erzeugung der Rotation wird durch eine mechanische Vorrichtung bewirkt. Es wird z. B. ein Paddelrührer mit 100 Upm betrieben. Der gleichmäßige Überzug soll durch die Rotation der feinverteilten Teilchen erreicht werden. Eine derartige Vorrichtung mit einem Zentrifugalventilator wird für das Verfahren der Erfindung nicht benötigt. Dieses regelt die gleichmäßige Beschichtung durch die Einstellung der begrenzten Wirbelfontäne mit vorgegebener Strömungsgeschwindigkeit in Richtung der Mittelachse der Kernzone unter Einstellung einer hohen Volumenkonzentration. Dieser Stand der Technik hat somit einen anderen Weg vorgeschlagen, der das Verfahren der Erfindung sowie die Vorrichtung zu seiner Durchführung nicht nahegelegt hat, da dieser andere Parameter und Elemente verwendet.

Die DE-A-2 726 164 betrifft eine Beschichtungsvorrichtung zum Erzeugen von Überzugsschichten auf Partikeln. Diese Vorrichtung besteht aus einem vertikalen, hohlen, zylinderförmigem Behälter, in dem ein hohler Kegelstumpf angeordnet ist, der sich nach oben verjüngt. Außerhalb dieses Kegelstumpfes befindet sich die Lagerungszone für das zu beschichtende Gut. Der durch den Kegelstumpf aufsteigende Gasstrom nimmt die feinen Tröpfchen des Beschichtungsmaterials auf. Durch Leitkörper wird die eintretende Luft gebündelt und steigt nach oben. Es wird über den gesamten Querschnitt der Kammer ein Gasstrom von im wesentlichen gleicher Geschwindigkeit vorgesehen. Die außerhalb des Kegelstumpfes befindlichen Partikel werden durch den Luftstrom mitgerissen. Der untere Teil des Konus wird als zentrale Zone bezeichnet, d. h. als Beschickungszone. In dieser Zone kommt das zu behandelnde Gut mit dem fein zerstäubten Spray in Berührung. Weiter oben im hohlen Kegelstumpf geht der flüssige Zustand des auf den Pellets oder Partikeln abgelagerten Beschichtungsmaterials durch Verdampfungs- oder Erstarrungsprozesse in den festen Zustand über. Die Agglomeration soll durch die Beschleunigung der Strömung der Teilchen verhindert werden. Diese soll eine Trennung der Partikel in vertikaler Richtung bewirken. Dieser Bereich des Kegelstumpfes wird als »Trocknungszone« bezeichnet. Oberhalb des Kegelstumpfes soll eine Expansion und dadurch ein Abbremsen eintreten und eine weitere Trocknung stattfinden. Die Partikel sollen durch die Schwerkraft wieder in die Beschichtungszone zurückfallen. Die Rezirkulation soll fortgesetzt werden, bis eine gewünschte Beschichtung erreicht ist.

Diese Vorrichtung und ihre Arbeitsweise unterscheidet sich von dem Verfahren der Erfindung und der Vorrichtung zu seiner Durchführung erheblich. Die Vorrichtung der Erfindung verwendet keinen inneren, nach oben verjüngten Kegelstumpf in einem vertikalen, zylindrischen Behälter.

Die Vorrichtung der Erfindung besteht vielmehr als solche aus einem sich gerade umgekehrt nach oben erweiternden Oberteil und einem unteren kurzen trichterförmigem Unterteil. Das zu beschichtende Gut befindet sich nicht außerhalb der Zone, in welche die Luft einströmt. Es wird als kein »Mitreißeffekt« sondern ein Wirbeleffekt erreicht. Dieser hat den Vorteil, daß mit weniger Luft eine Kernzonen mit hoher Volumenkonzentration für die Beschichtung eingestellt wird. Außerdem wird die Beschichtung in der im Volumen wesentlich größeren Kernzone und nicht in der kleinen Zone des Kegelstumpfes durchgeführt.

Nur durch den technischen Effekt des Verfahrens der Erfindung mit der Vorrichtung zu seiner Durchführung wird die Aufgabe gelöst, eine gleichmäßige, geschlossene Oberflächenbeschichtung einzelner Körner von rieselfähigen Gütern annähernd gleichmäßiger Korngröße mit glatter, rauher oder zerklüfteter Oberfläche in der Wirbelfontäne mit Warmluft unter Verwendung eines anorganischen und/oder organischen Beschichtungsmittels aus einer Suspension oder Lösung zu erzeugen.

Das Verfahren gemäß der Erfindung ist im Patentanspruch 1 definiert.

Zur Lösung dieser Aufgabe wird eine vorgegebene Menge des zu beschichtenden Gutes in einen steilen, sich trichterförmig nach oben erweiterenden Behälter mit einem kürzeren, flacheren trichterförmigen Unterteil durch Eindrücken eines von unten nach oben gerichteten Warmluftstromes bestimmter Strömungsgeschwindigkeit in einer Wirbelfontäne als Kernzone behandelt, wobei in gleicher Richtung mit der Warmluft das wirbelnde Gut von unten mit einer nach oben gerichteten Suspension oder Lösung mit einem Anfangssprühwinkel zwischen 30 und 60° eingesprüht wird bis die vorgegebene Menge pro Zeit in dem Kernstrom hoher Volumenkonzentration aufgenommen ist unter gleichzeitiger Antrocknung beim Aufstieg des Gutes in der Kernzone und danach erfolgt ein seitliches Abgleiten des beschichteten Gutes in der Randzone verminderten Strömungsdruckes in den trichterförmigen Unterteil zur Wirbelfontäne hin und es erfolgt die Wiederholung dieser Verfahrensschritte bis die vorgegebene Beschichtungsmenge aufgetragen ist und danach erfolgt die Trocknung des beschichteten Gutes auf die vorgegebene Endfeuchte.

Das Verfahren der Erfindung ist in den Unteransprüchen alternativ mit der Vorrichtung zu seiner Durchführung definiert.

Diese Maßnahmen betreffen die untere und obere Begrenzung des Korndurchmessers bei gleichmäßiger Korngröße des Gutes sowie Beispiele für zu beschichtende Güter.

Ferner betreffen diese alternativen Maßnahmen die hohe Volumenkonzentration aus dem Verhältnis des Volumens des zu beschichtenden Gutes in der Kernzone zu dem Volumen der Kernzone. Ferner betreffen diese alternativen Maßnahmen die Ausbildung der Kernzone der Wirbelfontäne als ein sich von unten nach oben erweiternder Trichter mit einem bestimmten Querschnittsverhältnis aus unterem Querschnitt zum oberen Querschnitt sowie die Einstellung der Strömungsgeschwindigkeit am unteren Abschluß des Behälters zur Festlegung der Höhe der Kernzone. Weiter betreffen diese alternativen Maßnahmen den Kornbereich des zu beschichtenden Gutes, der vorzugsweise einen Bereich von plus/minus 20 Prozent der mittleren Korngröße nicht überschreiten soll und wobei das Gut etwa das gleiche spezifische Gewicht aufweisen soll. Weiter betreffen diese alternativen Maßnahmen, daß ein feiner Sprühnebel mit Sprühpartikeln gebildet werden soll, der um ein Vielfaches kleiner ist als die mittlere Korngröße des zu beschichtenden Gutes und die Partikelgröße des Sprühnebels durch die Wahl der Düse und durch Einstellung des Sprühdruckes in Abhängigkeit von der Viskosität der Suspension oder Lösung geregelt werden soll, sowie daß der Austrittsdruck so eingestellt wird, daß die Ausbreitungsgeschwindigkeit der Sprühpartikel größer ist als die Fluggeschwindigkeit des zu beschichtenden Gutes und daß der Austrittswinkel und die Ausbreitungsgeschwindigkeit der Sprühpartikel am Düsenaustritt auf einen oberen Wert derart begrenzt wird, daß bei vollständiger Adsorption des Beschichtungsmittels kein seitlicher Austritt aus der Kernzone erfolgt.

Diese alternativen Maßnahmen betreffen auch die Regelung der Höhe des Sprühnebels im Oberteil des Behälters durch den Sprühdruck und die Luftgeschwindigkeit der eintretenden Warmluft und die Begrenzung derart, daß kein Durchschlagen freier Sprühpartikel erfolgt. Weiter betreffen diese Maßnahmen die Reinigung, Trocknung und Zurückführung der Abluft.

Eine bevorzugte Ausführungsform des Verfahrens der Erfindung besteht darin, daß jeweils ein Behälter periodisch in einem kontinuierlichen Prozeß mit der vorgegebenen Menge des Gutes gefüllt, von unten Warmluft im Gleichstrom mit einer Teilmenge der Suspension oder Lösung in die Kernzone eingeführt und in gleicher Weise beschichtet und dabei gleichzeitig angetrocknet wird, danach in diesen Behälter eine weitere Teilmenge der Suspension oder Lösung eingeführt, angetrocknet und dieser Vorgang solange wiederholt wird, bis die vorgegebene Beschichtungsmenge homogen verteilt auf die Körner des Gutes aufgebracht ist und danach die Trocknung bis zur vorgegebenen Endfeuchte erfolgt.

Weitere alternative Merkmale betreffen die Vorrichtung zur Durchführung des Verfahrens der Erfindung.

Diese besteht aus einer definierten konstruktiven Anordnung bestimmter Teilvorrichtungen und zwar des Behälters mit sich nach oben erweiterndem Oberteil und mit dem trichterförmigem Unterteil, sowie mit Siebabschluß am oberen und unteren Ende und mit bestimmter Querschnittsänderung und mit auswechselbaren Sieben mit bestimmtem freien Querschnitt. Diese Vorrichtung zur Durchführung des Verfahrens der Erfindung weist über dem oberen Siebabschluß eine Abzugshaube auf. Diese ist auch mit einer Strömungsblende ausgebildet, die am unteren Siebabschluß darin besteht, daß ein Luftschacht angeordnet ist, der die Warmluft einleitet, dessen Querschnitt definierte Masse aufweist und der durch eine Blende verändert werden kann.

Weitere Merkmale der Vorrichtung zur Durchführung des Verfahrens der Erfindung betreffen die Anordnung von Düsen im unteren Teil des Behälters sowie die Beschichtung zur Erhöhung der Gleitfähigkeit des zu beschichtenden Gutes und zur Geräuschdämmung und die Oberflächenbeschichtung der Innenwand des Behälters mit abriebfestem Kunststoff mit glatter Oberfläche.

Das Verfahren gemäß der Erfindung mit der Vorrichtung zu seiner Durchführung ist in dem Ausführungsbeispiel beschrieben. Das Verfahren gemäß der Erfindung ist jedoch durch dieses Beispiel nicht beschränkt. Dies gilt ebenso für die Ausbildung der Vorrichtung zu seiner Durchführung, die unter Verwendung der technischen Effekte ihrer Anordnung alternativ ausgestaltet werden kann.

## Beispiel

In einem Behälter (1) werden 5 kg eines Gutes mit kugelförmigen Körnern des spezifischen Gewichtes von 0,9 bis 1,1 kg/l und im Kornspektrum von 3,0 bis 4,75 mm von oben eingefüllt.

Ein von unten nach oben durch den Behälter (1) geführter Warmluftstrom mit einer Temperatur zwischen 40° und 100° C wird nach Verschließen des oberen Siebabschlusses (4) mittels einer Luftklappe (9) im Luftschacht (8) derart geregelt, daß die im trichterförmigen Unterteil (3) des Behälters (1) zunächst ruhenden Körner aufgewirbelt und in der zentrisch zur Behälterachse gerichteten Kernzone (13) zu einer Wirbelfontäne (6) aufsteigen. Dabei bewirkt die Konstruktion des Lufteintrittes mit Querschnitt und Form des Luftschachtes (8), dem Querschnitt des unteren Siebabschlusses (5) unter Berücksichtigung dessen freier Durchtrittsfläche und dem Querschnitt und der Form des unteren Trichters (3) des Behälters, daß die Luftströmung mit dem aufgewirbelten Gut eine gebündelte Kernzone (13) rotierend und wirbelnd aufsteigender Körner erzeugt. Aus der Form und Höhe der Kernzone als schlanken Trichter von 150 mm mittlerem Durchmesser und der Höhe von 0,7 bis 0,8 Meter und mit dem Volumen der eingegebenen Menge der Körner ergibt sich im Bereich der Kernzone eine errechnete mittlere Volumenkonzentration der Körner in der Kernzone von etwa 20 bis 25 Prozent. Die Strömungsgeschwindigkeit und der Strömungsdruck nehmen mit zunehmender Höhe der Kernzone infolge der Querschnittserweiterung der Strömung und der Druckverluste aufgrund des Strömungswiderstandes der Partikel ab und die entgegengerichtete Gewichtskraft der Körner verlangsamt deren Geschwindigkeit bis zum Gleichgewicht von Strömungsgeschwindigkeit und Sinkgeschwindigkeit der Körner, so daß die Körner in einer Umkehrzone oberhalb der Kernzone (13) nach außen in den Bereich verminderten Strömungsdruckes und Strömungsgeschwindigkeit am Umfang der Behälterwand ableiten und an dieser entlang in den Unterteil (3) des Behälters (1) zurückfallen wo sie durch ihr Eigengewicht und die Neigung des unteren Trichters (3), die größer ist als der Schüttwinkel der ruhenden Körnerschüttung, allseitig gleichmäßig und kontinuierlich in die Kernströmung (13) der Wirbelfontäne (6) zurückrutschen und erneut aufgewirbelt werden. Die eintretende Luftströmung wird im Bereich der Gebläseleistung von 500 bis 2000 Pa absoluten Druckes und die Luftgeschwindigkeit im Luftschacht mit angenommenem freien Durchtritt im Bereich von 6 bis 15 Meter/Sekunde so geregelt, daß die Kernzone (13) mit darüberliegender Umkehrzone der Wirbelfontäne (6) 3/4 bis 4/5 der Behälterhöhe nicht übersteigt.

Mittels einer Pumpe wird die vorbereitete Suspension oder Lösung, deren Feststoffanteil die Beschichtung der Körner bildet und deren Viskosität bei 20 bis 30% Feststoffanteil zwischen 0,5 bis 1,0 Pa s beträgt, unter einem nach Sprühbild einzustellenden Druck der Düsen von 50 bis 120 bar zum Düsenstock (10) gefördert, der im unteren Trichter (3) des Behälters (1) eine oder mehrere Düsen (11) hält, die im Gleichstrom mit der von unten einströmenden Warmluft die Suspension oder Lösung unter einem Anfangssprühwinkel von 60° Sprühtropfen von weniger als 0,2 mm Durchmesser in die Kernzone versprühen sollen. Der Sprühwinkel wird durch die Strömungsgeschwindigkeit der Warmluft mit zunehmender Entfernung von der Düsenmündung eingeengt und darf nach Wahl der Düse und des Pumpendruckes nur so groß sein, daß mit der Ablenkung der Sprühtropfen durch die Warmluft in axialer Richtung und mit zunehmender Adsorption der Sprühtropfen an der Oberfläche der Körner durch deren hohe Volumenkonzentration und deren gegenüber der Ausbreitungsgeschwindigkeit der Sprühtropfen langsamere Aufstiegsgeschwindigkeit in der Kernzone (13) der Wirbelfontäne (6) die Sprühzone (12) sowohl am Umfang als auch in ihrer Höhe derart begrenzt wird, daß das Ansprühen der Behälterwand (2) und des oberen Siebabschlusses (4) weitgehend vermieden wird.

Sobald die Parameter der Warmluftströmung für die Einstellung der Wirbelfontäne und die Parameter der Warmluftströmung, der Wahl und Anordnung der Sprühdüsen und des Sprühdruckes für die Feinheit der Sprühpartikel und die Begrenzung der Sprühzone nach den beschriebenen Bedingungen erfüllt sind, erfolgt die Eichung des Düsendurchsatzes. Unter der Bedingung, daß die Beschichtung eine 10prozentige Gewichtszunahme der Körner an Feststoff bewirken soll und die Suspension oder Lösung einen Feststoffanteil von 20 Gewichtsprozent hat, müssen für die Beschichtung von 5 kg Körnern 2,5 kg der Suspension oder Lösung aufgesprüht werden, die der Düsensatz nach Eichung unter dem vorgegebenen Sprühdruck in einer definierten, kurzen Zeit leistet.

Der Beschichtungsprozeß wird danach zeitlich in Sprüh- und Trocknungsphasen so aufgeteilt, daß die Antrocknungsphase gleichzeitig mit der Sprühphase stattfindet. Nach Ende der Sprüh- und Antrocknungsphase wird eine reine Trocknungszeit nachgeschaltet, die je nach Temperatur der Warmluft einen definierten, kurzen Zeitraum umfaßt und zeitlich dadurch begrenzt wird, daß die Ablufttemperatur während dieser Trocknungszeit nicht wesentlich steigt. Solange nämlich die Energie der Warmluft nur zur Verdampfung des die Körner benetzenden Suspensions- oder Lösungsmittels verwendet wird, nimmt das Korn die dem Dampfdruck der Flüssigkeit und dem Luftzustand entsprechende Kühlgrenztemperatur an und die Ablufttemperatur bleibt konstant. Erst bei Abtrocknung der Oberfläche und vermindertem Stoffübergang der Flüssigkeit vom Korn in die Dampfphase aufgrund von erhöhtem Diffusionswiderstand der angetrockneten Schicht erwärmt sich diese Schicht zunehmend dem Inneren des Kornes. Das Maß für den Anstieg der Gutstemperatur bildet der Anstieg der Ablufttemperatur, worauf entweder die Temperatur der zugeführten Warmluft teilweise oder ganz bis zur festgelegten Gutsendtemperatur heruntergeregelt werden kann oder das Gut bei einer definierten erreichten Ablufttemperatur ausgetragen und danach in einer geeigneten Kühlvorrichtung mit Kaltluft auf eine beabsichtigte Temperatur abgekühlt werden kann. Durch Probenahme in der Trocknungsphase wird für den Prozeß das Ende der Trocknungszeit bestimmt, wonach das Gut eine Temperatur von z. B. 40°C und eine Restfeuchte von 12 bis 13 Prozent nicht überschreiten soll. Sobald die für diese Werte benötigte Trocknungszeit festgelegt ist, können unter den konstanten Parametern des Prozesses beliebig viele Chargen des gleichen Gutes nach diesen zeitlichen Programm beschichtet werden.

Die Homogenität der Beschichtung auf der Oberfläche der einzelnen Körner kann durch den optischen Vergleich mittels Farbzusatz der Beschichtungsflüssigkeit kenntlich gemacht werden. Die Homogenität und die vollständige Auftragung der Beschichtungsmenge von Korn zu Korn kann durch den Zusatz einer Kennsubstanz in der Beschichtungsflüssigkeit und deren chemischen Nachweis auf den einzelnen Körnern gemessen werden.

Dieser Test bestätigt für nach dem Verfahren der Erfindung beschichtete Güter die Homogenität der Beschichtung. Unter dieser Homogenität wird jedoch nicht nur die Beschichtung mit einer Masse gleicher, chemischer Zusammensetzung verstanden. Das Verfahren der Erfindung gestattet durchaus auch mehrere Schichten nacheinander mit unterschiedlicher chemischer Zusammensetzung homogen miteinander zu verbinden. Das technologische Ausführungsbeispiel ist nicht auf bestimmte, zu beschichtende Güter beschränkt, wenn diese die Parameter des Verfahrens der Erfindung erfüllen. Es können also körnige Naturprodukte wie auch anorganische, technisch gekörnte Schüttgüter mit glatter, rauher oder zerklüfteter Oberfläche unter Erzeugung einer gleichmäßigen, geschlossenen Oberfläche beschichtet werden. Das Verfahren der Erfindung bietet außer dieser Anwendungsbreite, auf die zu beschichtenden Güter bezogen, den technischen Vorteil einer gleichmäßigen Beschichtung mit hoher Verteilungsgenauigkeit mit einer vorgegebenen Menge oder Schichtdicke der aufzubringenden Stoffe. Das Verfahren der Erfindung gestattet die nach dem Stand der Technik bekannten, anorganischen und/oder organischen Substanzen als Suspension oder Lösung zu verwenden.

Das Verfahren der Erfindung bietet den Vorteil, daß die eingebrachte Suspension oder Lösung aufgrund der hohen Volumenkonzentration (V/V) praktisch vollständig verbraucht wird. Es wird also keine Aufbereitung und Rückführung dieser Stoffe oder deren Verlust notwendig.

Damit ist zugleich der Vorteil einer weitgehend von Feststoffen freien Abluft verbunden. Das Verfahren der Erfindung bietet mit der Ausbildung der Vorrichtung zu seiner Durchführung den technischen Vorteil, daß die Oberflächenbeschichtung in kurzer Zeit erfolgt, woraus sich eine hohe Durchsatzkapazität ergibt. Es findet auch keine wesentliche Erwärmung des beschichteten Gutes statt, was insbesondere für biologische Güter vorteilhaft ist.

Durch die kurze Verweilzeit im inneren Umlauf des Verfahrens der Erfindung bei der stufenweisen Beschichtung ergeben sich insgesamt kurze, freie Weglängen des Gutes in der Vorrichtung gemäß der Erfindung. Es erfolgt somit nur eine geringe, gegenseitige Reibung der beschichteten Körner und nur eine geringe, mechanische Beanspruchung. Es wird somit praktisch kein, oder im Einzelfall nur eine sehr geringe Menge an Abrieb gebildet.

Die Vorrichtung zur Durchführung des Verfahrens der Erfindung bietet mit seiner geometrischen Dimensionierung und seinen Maßen in Verbindung mit den Einstellungsparametern des Verfahrens der Erfindung die vorteilhafte Möglichkeit für unterschiedliche, zu beschichtende Güter die aufzubringende Menge oder die Schichtdicke oder den Durchmesser des beschichteten Gutes spezifisch einzustellen.

Die Vorrichtung gemäß der Erfindung arbeitet aber auch im Luftverbrauch und im Energiebedarf sehr wirtschaftlich.

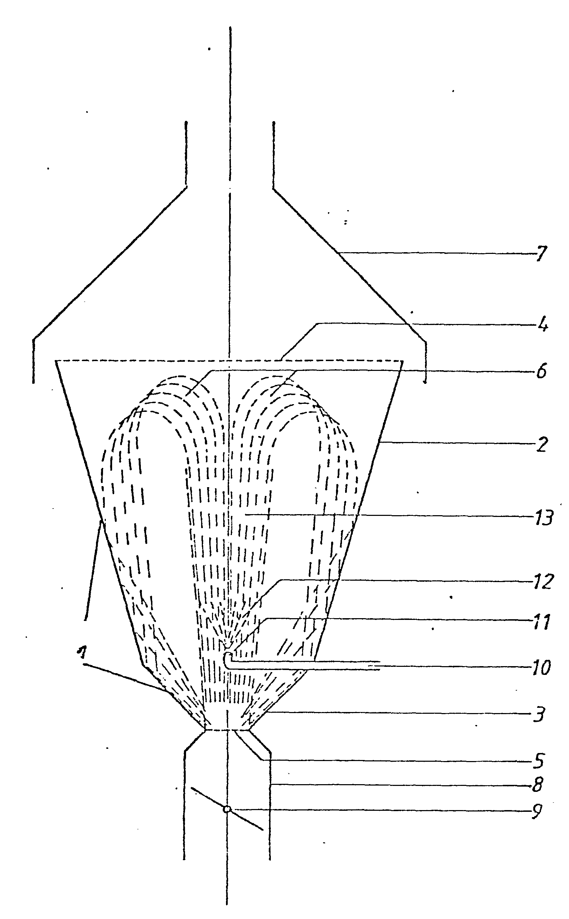

## Patentansprüche

1. Verfahren zur gleichmäßigen, geschlossenen Oberflächenbeschichtung einzelner Körner von rieselfähigen Gütern annähernd gleichmäßiger Korngröße mit glatter, rauher oder zerklüfteter Oberfläche in der Wirbelfontäne mit Warmluft unter Verwendung eines anorganischen und/oder organischen Beschichtungsmittels aus einer Suspension oder Lösung, dadurch gekennzeichnet, daß eine vorgegebene Menge des zu beschichtenden Gutes in einem steilen, sich trichterförmig nach oben erweiternden Behälter mit einem kürzeren, flacheren trichterförmigen Unterteil durch Eindrücken eines von unten nach oben gerichteten Warmluftstromes bestimmter Strömungsgeschwindigkeit eine im Durchmesser und in der Höhe begrenzte Wirbelfontäne in Richtung der Mittelachse als Kernzone bildet,
Einsprühen einer in gleicher Richtung mit der Warmluft von unten mittels einer oder mehrerer, am unteren Ende des Behälters angebrachten Düsen eintretenden, nach oben gerichteten Suspension oder Lösung mit einem Anfangssprühwinkel zwischen 30 und 60° mit vorgegebener Menge pro Zeit in den Kernstrom hoher Volumenkonzentration und vollständiger und gleichmäßiger Aufnahme der Suspension von der Oberfläche des Gutes,
und gleichzeitiger Antrocknung beim Aufstieg des behandelten Gutes in der Kernzone und beim seitlichen Abgleiten desselben in der Randzone verminderten Strömungsdruckes entlang der Behälterwand in den trichterförmigen Unterteil zur Wirbelfontäne hin und
Wiederholung dieser Verfahrensschritte bei gleichzeitiger Antrocknung bis die vorgegebene Beschichtungsmenge aufgetragen ist und Trocknung des beschichteten Gutes auf eine vorgegebene Endfeuchte.

2. Verfahren nach Anspruch 1, dadurch gekennzeichnet, daß das zu beschichtende Gut den Korndurchmesser von 0,5 mm als untere und von 15 mm als obere Korngrenze bei gleichmäßiger Korngröße des Gutes einer Charge nicht unter- bzw. überschreitet.

3. Verfahren nach den Ansprüchen 1 und 2, dadurch gekennzeichnet, daß als zu beschichtendes Gut körnige Nahrungsmittel, Genußmittel, Saatkörner, Pharmazeutika verwendet werden.

4. Verfahren nach den Ansprüchen 1 bis 3, dadurch gekennzeichnet, daß die hohe Volumenkonzentration aus dem Verhältnis des Volumens des zu beschichtenden Gutes in der Kernzone : Volumen der Kernzone gebildet wird und 10 : 100 bis 35 : 100 beträgt.

5. Verfahren nach den Ansprüchen 1 bis 4, dadurch gekennzeichnet, daß die Kernzone der Wirbelfontäne, die mittels einer von unten durch eine Strömungsblende eingeführten Warmluft erzeugt wird, einen von unten nach oben sich erweiternden steilen Trichter bildet, deren Querschnittsverhältnis aus unterem Querschnitt, gebildet vom Durchmesser der Strömungsblende, zum oberen Querschnitt 1 : 1,2 bis 2 beträgt.

6. Verfahren nach den Ansprüchen 1 bis 5, dadurch gekennzeichnet, daß die Strömungsgeschwindigkeit am unteren Abschluß des Behälters so eingestellt wird, daß die Höhe der Kernzone $3/4$ bis $4/5$ der Behälterhöhe erreicht.

7. Verfahren nach den Ansprüchen 1 bis 6, dadurch gekennzeichnet, daß der Kornbereich des Gutes jeweils homogener Chargen im eingeengten Kornbereich einen Bereich von plus/minus 20 Prozent von der mittleren Korngröße nicht überschreitet und das Gut etwa gleiches spezifisches Gewicht aufweist.

8. Verfahren nach den Ansprüchen 1 bis 7, dadurch gekennzeichnet, daß die Versprühung der Suspension oder Lösung mit so hohem Druck am Düsenaustritt erfolgt, daß ein feiner Sprühnebel mit Sprühpartikeln gebildet wird, die um ein Vielfaches kleiner sind als die mittlere Korngröße des Gutes.

9. Verfahren nach den Ansprüchen 1 bis 8, dadurch gekennzeichnet, daß die Partikelgröße des Sprühnebels durch die Wahl der Düse und durch Einstellung des Sprühdruckes in Abhängigkeit von der Viskosität der Suspension oder Lösung geregelt wird.

10. Verfahren nach den Ansprüchen 1 bis 9, dadurch gekennzeichnet, daß der Austrittsdruck so eingestellt wird, daß die Ausbreitungsgeschwindigkeit der Sprühpartikel größer ist als die Fluggeschwindigkeit des zu beschichtenden Gutes.

11. Verfahren nach den Ansprüchen 1 bis 10, dadurch gekennzeichnet, daß der Austrittswinkel und die Ausbreitungsgeschwindigkeit der Sprühpartikel des Sprühnebels am Düsenaustritt auf einen oberen Wert derart begrenzt wird, daß bei vollständiger Adsorption des Beschichtungsmittels an der Oberfläche des zu beschichtenden Gutes kein seitlicher Austritt aus dem Querschnitt der Kernzone hoher Volumenkonzentration erfolgt.

12. Verfahren nach den Ansprüchen 1 bis 11, dadurch gekennzeichnet, daß die Höhe des Sprühnebels der Sprühpartikel im Oberteil des Behälters durch den Sprühdruck und die Luftgeschwindigkeit der eintretenden Warmluft geregelt wird und diese Höhe bei vollständiger Adsorption des Beschichtungsmittels auf der Oberfläche des zu beschichtenden Gutes so begrenzt wird, daß kein Durchschlagen freier Sprühpartikel über die Höhe der Kernzone hinaus erfolgt.

13. Verfahren nach den Ansprüchen 1 bis 12, dadurch gekennzeichnet, daß die abgekühlte, dampfbeladene Abluft abgesaugt, die Dampfphase durch Kondensation abgetrennt und die Luft nach Reinigung und Aufheizung ganz oder teilweise zurückgeführt wird.

14. Verfahren nach einem der Ansprüche 1 bis 13, dadurch gekennzeichnet, daß jeweils ein Behälter periodisch in einem kontinuierlichen Prozeß mit einer vorgegebenen Menge des zu beschichtenden Gutes gefüllt und von unten die Warmluft im Gleichstrom mit einer Teilmenge der Suspension oder Lösung oder unterschiedlich zusammengesetzten Suspensionen oder Lösungen in die Kernzone des zu beschichtenden Gutes eingeführt und in gleicher Weise beschichtet und gleichzeitig angetrocknet wird, danach in diesen Behälter eine weitere Teilmenge der Suspension oder Lösung oder eine andere Suspension oder Lösung eingesprüht, angetrocknet und dieser Vorgang in weiteren Verfahrensstufen solange wiederholt wird, bis die vorgegebenen Beschichtungsmengen homogen verteilt auf die Körner des Gutes aufgebracht sind, danach in einer weiteren Verfahrensstufe das beschichtete Gut so lange getrocknet wird, bis eine definierte Endfeuchte eingestellt ist, danach in einer weiteren Verfahrensstufe mit Luft das beschichtete Gut abgekühlt und ausgetragen, die Abluft ausgeführt, getrocknet und gereinigt rezyklisiert wird.

15. Vorrichtung zur gleichmäßigen, geschlossenen Oberflächenbeschichtung einzelner Körner von rieselfähigen Gütern zur Durchführung des Verfahrens nach den Ansprüchen 1 bis 14, dadurch gekennzeichnet, das diese aus dem Behälter (1) mit den kreisrunden oder mehreckigen Querschnitten des sich nach oben erweiternden Oberteils (2) und des unten angesetzten, trichterförmigen Unterteils (3) mit Öffnung nach oben besteht, der an seinem oberen und unteren Ende je einen Siebabschluß (4, 5) trägt und dessen Querschnittsänderung vom unteren Siebabschluß (5) bis zur Oberkante des unteren Trichters (3) im Winkel von 20° bis 50° zur senkrechten Achse erfolgt und von der Unterkante des Oberteils bis zum oberen Siebabschluß (4) im Verhältnis 1 : 1,5 bis 4,5 steht und dessen oberer (4) und unterer (5) Siebabschluß aus auswechselbaren Sieben mit größtmöglichem freien Querschnitt und einer Maschenweite kleiner als der kleinste Querschnitt des zu beschichtenden Gutes besteht.

16. Vorrichtung nach Anspruch 15, dadurch gekennzeichnet, daß über dem oberen Siebabschluß (4) eine Abzugshaube (7) zur Absaugung der austretenden Warmluft angeordnet ist.

17. Vorrichtung nach den Ansprüchen 15 und 16, dadurch gekennzeichnet, daß zur Ausbildung einer Strömungsblende unterhalb des unteren Siebabschlusses (5) ein Luftschacht (8) angeordnet ist, der die Warmluft des Gebläses in den Behälter (1) leitet, dessen Querschnitt (8) größer ist als der Querschnitt des unteren Siebabschlusses (5), dessen Querschnitt (8) durch eine weitere Blende oder Luftklappe (9) verändert werden kann.

18. Vorrichtung nach den Ansprüchen 15 bis 17, dadurch gekennzeichnet, daß in den unteren Teil des Behälters (1) seitlich ein oder mehrere Düsenstöcke (10) eingesetzt sind, deren Düse oder Düsen (11) in Richtung der senkrechten Achse des Behälters nach oben ausgerichtet sind.

19. Vorrichtung nach den Ansprüchen 15 bis 18, dadurch gekennzeichnet, daß die Innenwand des Behälters (1) eine Beschichtung zum Korrosionsschutz der Wand zur Erhöhung der Gleitfähigkeit des zu beschichtenden Gutes an der Wand und zur Geräuschdämmung aufweist.

20. Vorrichtung nach Anspruch 19, dadurch gekennzeichnet, daß die Oberflächenbeschichtung der Innenwand des Behälters (1) aus abriebfestem Kunststoff mit glatter Oberfläche besteht.

## Claims

1. Method for the uniform, total surface coating of individual grains of fluid materials of approximately uniform grain size with a smooth, rough or fissured surface, in a vortex fountain with warm air, using an inorganic and/or organic coating medium as a suspension or solution, characterized by forming a predetermined quantity of the material to be coated into a vortex fountain, in a steeply sloping container which widens upwardly in the shape of a funnel and has a short flatter funnel-shaped lower part, by forcing in a current of warm air from below upward at a selected speed of flow, the vortex fountain being limited in diameter and in height and having a core zone along the central axis; spraying in by means of one or more nozzles mounted at the lower end of the container an upwardly directed suspension or solution that enters in the same direction as the warm air from below, with an initial spray angle between 30 and 60°, the spray being directed in a predetermined quantity per unit time into the core stream at high volume concentration for complete and uniform reception of the suspension on to the surface of said material; and simultaneous surface drying of the treated material during its ascent in the core zone and during its outflow and descent in the peripheral zone along the container wall, where the flow pressure is reduced, for return in the funnel-shaped lower part towards the vortex fountain; and repetition of these process steps with simultaneous surface drying until the predetermined coating quantity is applied; and drying of the coated material to a predetermined final moistness.

2. Method according to Claim 1, characterized in that the material which is to be coated does not fall below a grain diameter of 0.5 mm as lower limit and does not exceed a grain diameter of 15 mm as upper limit, the grain size of the material of one batch being uniform.

3. Method according to Claims 1 and 2, characterized in that granular foodstuffs, stimulants, seed grains or pharmaceutical products are used as the material which is to be coated.

4. Method according to Claims 1 to 3, characterized in that the high volume concentration is achieved by selecting a ratio of the volume of the material to be coated in the core zone to the volume of the core zone in the range 10 : 100 to 35 : 100.

5. Method according to Claims 1 to 4, characterized in that the core zone of the vortex fountain, produced by means of warm air introduced from below through a flow orifice, forms a steeply sloping funnel which widens from below upward, of which the cross-section ratio from the lower cross-section, formed by the diameter of the flow orifice, to the upper cross-section is in the range 1 : 1.2 to 2.

6. Method according to Claims 1 to 5, characterized in that the flow speed at the lower end of the container is set such that the height of the core zone reaches 3/4 to 4/5 of the container height.

7. Method according to Claims 1 to 6, characterized in that the grain size range of the material in the case of each homogeneous batch in the restrcted grain size range does not exceed plus or minus 20 percent of the mean grain size and the material all has approximately the same specific weight.

8. Method according to Claims 1 to 7, characterized in that the spraying of the suspension or solution takes place at the nozzle outlet at such high pressure that a fine spray mist is formed with spray particles which are many times smaller than the mean grain size of the material.

9. Method according to Claims 1 to 8, characterized in that the particle size of the spray mist is regulated by the selection of the nozzle, and by the setting of the spray pressure, dependent upon the viscosity of the suspension or solution.

10. Method according to Claims 1 to 9, characterized in that the discharge pressure is adjusted such that the speed of dispersion of the spray particles is greater than the travelling velocity of the material which is to be coated.

11. Method according to Claims 1 to 10, characterized in that the angle of emergence and the speed of dispersion of the spray particles of the spray mist at the nozzle outlet are each limited to a value such that by complete adsorption of the coating medium on to the surface of the material to be coated no lateral output from the cross section of the core zone of high volume concentration takes place.

12. Method according to Claims 1 to 11, characterized in that the height of the spray mist of the spray particles in the upper part of the container is regulated by the spray pressure and the air velocity of the ingoing warm air, and by complete adsorption of the coating medium on to the surface of the material to be coated this height is limited such that no projection of free spray particles beyond the height of the core zone takes place.

13. Method according to Claims 1 to 12, characterized in that cooled, steam-charged exhaust air is sucked out, the steam phase is separated through condensation and the air is wholly or partly returned after cleaning and reheating.

14. Method according to one of Claims 1 to 13, characterized in that in each treatment the container is filled periodically in a continuous process with a predetermined quantity of the material which is to be coated and from below the warm air is introduced in a continuous current with a portion of the suspension or solution, or differently composed suspensions or solutions, into the core zone of the material which is to be coated, and coating and simultaneous drying take place in the aforesaid manner, then a further portion of the suspension or solution, or a different suspension or solution, is sprayed into the container, with surface drying and this process is repeated in further process steps until the predetermined coating quantities are applied, homogeneously distributed, on to the grains of the material, then in a further process step the coated material is dried until a defined final humidity is achieved, then in a further process step the coated material is cooled down by air and discharged, and the exhaust air is removed, dried and recycled in purified state.

15. Device for the uniform, total surface coating of individual grains of fluid materials, for carrying out the method according to Claims 1 to 14, characterized in that this consists of the container (1) with a circular or multi-angular cross-section upper part (2) which widens upward, and a funnel-shaped lower part (3) attached underneath and opening upward, and which at its upper and lower end in each case bears a filter closure (4, 5), the change in cross-section from the lower filter closure (5) to the upper edge of the lower funnel (3) occurs at an angle of 20° to 50° to the vertical axis, the change in cross-section from the lower edge of the upper part to the upper filter closure (4) is in the ratio 1 : 1.5 to 4.5, and the upper (4) and lower (5) filter closures consist of interchangeable filters with the largest possible free cross-section consistent with a screen aperture smaller than the smallest cross-section of the material which is to be coated.

16. Device according to Claim 15, characterized in that over the upper filter closure (4) a hood (7) is arranged for suction of the emerging warm air.

17. Device according to Claims 15 and 16, characterized in that, to form a flow orifice, an air duct (8) is arranged beneath the lower filter closure (5), which conducts the warm air of the jet into the container (1), the cross-section (8) of which duct is greater than the cross-section of the lower filter closure (5) and can be altered by a further orifice or air flap (9).

18. Device according to Claims 15 to 17, characterized in that one or more nozzle connections (10) are laterally inserted into the lower part of the container (1), the nozzle or nozzles (11) of which are directed upward in the direction of the vertical axis of the container.

19. Device according to Claims 15 to 18, characterized in that the inner wall of the container (1) has a coating for protection against corrosion of the wall, to increase the sliding ability on the wall of the material to be coated, and for noise insulation.

20. Device according to Claim 19, characterized in that the surface coating on the inner wall of the container (1) consists of abrasion-proof synthetic material with a smooth surface.

## Revendications

1. Procédé d'application d'un enrobage superficiel fermé, uniforme sur des grains de produits aptes à s'écouler de granulométrie à peu près uniforme, à surface lisse, rugueuse ou fissurée, en lit fluidisé par de l'air chaud en utilisant un agent d'enrobage minéral et/ou organique en suspension ou en solution, caractérisé en ce qu'il consiste à former, par une quantité prescrite du produit à enrober dans un récipient s'évasant vers le haut d'une manière abrupte en forme d'entonnoir et ayant une partie inférieure en forme d'entonnoir plus courte et plus plane, un lit fluidisé limité en diamètre et en hauteur servant de zone de coeur dans la direction de l'axe médian par injection d'un courant d'air chaud dirigé de bas en haut à vitesse d'écoulement déterminée,
à projeter, au moyen d'une ou plusieurs buses fixées à l'extrémité inférieure du récipient, une suspension ou une solution, dirigée vers le haut et entrant par le bas, avec un angle de projection initial compris entre 30 et 60°, en une quantité prescrite par unité de temps, dans le courant de coeur ayant une concentration élevée en volume et à faire absorber entièrement et uniformément la suspension par la surface du produit,
et à sécher simultanément le produit traité de la zone de coeur alors qu'il s'élève et à le faire glisser latéralement dans la zone marginale de moindre pression du courant le long de la paroi du récipient dans la partie inférieure en forme d'entonnoir en direction du lit fluidise, et
à répéter ces stades de procédé en séchant simultanément jusqu'à ce que la quantité d'enrobage prescrite ait été appliquée, et
à sécher le produit enrobé jusqu'à ce qu'il ait l'humidité finale prescrite.

2. Procédé suivant la revendication 1, caractérisé en ce que le produit à enrober n'est pas inférieur ou n'est pas supérieur en diamètre de grains à 0,5 mm en tant que limite granulométrique inférieure, et à 15 mm en tant que limite granulométrique supérieure, pour une granulométrie uniforme du produit d'une charge.

3. Procédé suivant les revendications 1 et 2, caractérisé en ce qu'il consiste à utilisier comme produit à enrober un produit alimentaire en grains, une épice en grains, une semence en grains ou un produit pharmaceutique en grains.

4. Procédé suivant les revendications 1 à 3, caractérisé en ce que la concentration en volume élevé est formée par le rapport du volume du produit à enrober dans la zone de coeur, au volume de la zone de coeur, et est comprise entre 10 : 100 et 35 : 100.

5. Procédé suivant les revendications 1 à 4, caractérisé en ce que la zone de coeur du lit fluidisé, qui est obtenue au moyen d'air chaud introduit par le bas à travers un écoulement formant écran, forme un entonnoir abrupt s'évasant du bas vers le haut, dont le rapport de la section droite inférieure formée par le diamètre du courant formant écran à la section droite supérieure, est compris entre 1 : 1,2 à 2.

6. Procédé suivant les revendications 1 à 5, caractérisé en ce qu'il consiste à régler la vitesse du courant à l'ouverture inférieure du récipient de manière à ce que la hauteur de la zone de coeur représente des $3/4$ aux $4/5$ de la hauteur du récipient.

7. Procédé suivant les revendications 1 à 6, caractérisé en ce que la plage granulométrique du produit de chaque charge homogène ne dépasse pas, dans une plage granulométrique rendue étroite, une plage de plus ou moins 20% par rapport à la granulométrie moyenne et le produit présente à peu près la même masse volumique.

8. Procédé suivant les revendications 1 à 7, caractérisé en ce qu'il consiste à effectuer la projection de la suspension ou de la solution à une pression si élevée à la sortie des buses qu'il se forme un fin nuage de pulvérisation ayant des particules pulvérisées qui sont plus petites d'un facteur de quatre que la granulométrie moyenne du produit.

9. Procédé suivant les revendications 1 à 8, caractérisé en ce qu'il consiste à régler la dimension des particules du nuage de pulvérisation en fonction de la viscosité de la suspension ou de la solution, en choisissant les buses et en réglant la pression de projection.

10. Procédé suivant les revendications 1 à 9, caractérisé en ce qu'il consiste à régler la pression à la sortie de manière à ce que la vitesse de déploiement des particules pulvérisées soit plus grande que la vitesse de vol du produit à enrober.

11. Procédé suivant les revendications 1 à 10, caractérisé en ce qu'il consiste à limiter l'angle de sortie et la vitesse de déploiement des particules pulvérisées du nuage pulvérisé à la sortie des buses à une valeur supérieure telle que, lorsque l'agent d'enrobage est entièrement adsorbé à la surface du produit à enrober, il n'y ait pas de sortie latérale hors de la section droite de la zone de coeur de concentration élevée en volume.

12. Procédé suivant les revendications 1 à 11, caractérisé en ce qu'il consiste à régler la hauteur du nuage pulvérisé de particules pulvérisées dans la partie supérieure du récipient, par la pression de projection et par la vitesse de l'air chaud qui entre, et à limiter cette hauteur quand l'agent d'enrobage est entièrement adsorbé sur la surface du produit à enrober, de manière à ce qu'il n'y ait pas de traversée de particules de pulvérisation libres sur la hauteur de la zone de coeur.

13. Procédé suivant les revendications 1 à 12, caractérisé en ce qu'il consiste à aspirer l'air résiduaire refroidi chargé de vapeur, à séparer la phase vapeur par condensation, et à recycler l'air en tout ou partie, après épuration et chauffage.

14. Procédé suivant l'une des revendications 1 à 13, caractérisé en ce qu'il consiste à charger un récipient périodiquement, suivant un processus en continu, d'une quantité prescrite du produit à enrober, et à introduire dans la zone de coeur du produit à enrober par en-dessous l'air chaud à contre-courant avec une quantité partielle de la suspension ou de la solution, ou des suspensions ou des solutions composées différemment, et à enrober de la même façon et à sécher simultanément, puis à projeter dans ce récipient une autre quantité partielle de la suspension ou de la solution, ou d'une autre suspension ou solution, à sécher et à répéter ce processus dans d'autres stades de procédé, jusqu'à ce que les quantités d'enrobage prescrites aient été appliquées en étant réparties de manière homogène sur les grains du produit, puis dans un autre stade du procédé, à sécher le produit enrobé jusqu'à ce qu'il ait une humidité finale définie, puis dans un autre stade du procédé, à refroidir par de l'air le produit enrobé et à le soutirer, à évacuer l'air résiduaire, à le sécher et à le recycler après l'avoir épuré.

15. Dispositif d'application d'un enrobage superficiel, uniforme, fermé sur des corps de produits aptes à s'écouler pour la mise en oeuvre du procédé suivant les revendications 1 à 14, caractérisé en ce que ce dispositif est constitué du récipient (1) avec les sections droites circulaires ou polygonales de la partie supérieure (2) qui s'évase vers le haut et de la partie inférieure (3) à ouverture vers le haut, en forme d'entonnoir et raccordée vers le bas, qui porte à ses extrémités supérieure et inférieure respectivement une fermeture à crible (4, 5) et dont la variation de section droite de la fermeture à crible (5) supérieure au bord supérieur de l'entonnoir (3) inférieur s'effectue suivant un angle de 20° à 50° par rapport à l'axe vertical et du bord inférieur de la partie supérieure à la fermeture à crible (4) supérieure est dans le rapport de 1 : 1,5 à 4,5 et dont les fermetures à cribles supérieure (4) et inférieure (5) sont constituées de cribles échangeables ayant la section droite libre la plus grande possible et une ouverture de maille plus petite que la section droite la plus petite du produit à enrober.

16. Dispositif suivant la revendication 15, caractérisé en ce que, au-dessus de la fermeture à crible (4) supérieure est disposée une hotte d'évacuation (7) pour l'aspiration de l'air chaud qui sort.

17. Dispositif suivant les revendications 15 et 16, caractérisé en ce que, pour la formation d'un courant formant écran, il est prévu, en-dessous de la fermeture à crible (5) intérieure, un puits pour l'air (8) qui conduit l'air chaud de la soufflante dans le récipient (1), dont la section droite (8) est plus grande que le section droite de la fermeture à crible (5) inférieure, et dont la section droite (8) peut être modifiée par un autre écran, ou par un volet pour l'air (9).

18. Dispositif suivant les revendications 15 à 17, caractérisé en ce que, dans la partie inférieure du récipient (1), sont placés latéralement un ou plusieurs porte-buses (10) dont la buse ou les buses (11) sont dirigées vers le haut, suivant la direction de l'axe vertical du récipient.

19. Dispositif suivant les revendications 15 à 18, caractérisé en ce que la paroi intérieure du récipient (1) présente un revêtement de protection contre la corrosion de la paroi, en vue d'augmenter l'aptitude au glissement du produit à enrober sur la paroi, et en vue d'amortir le bruit.

20. Dispositif suivant la revendication 19, caractérisé en ce que le revêtement de surface de la paroi intérieure du récipient (1) est en matière plastique résistant à l'usure et ayant une surface lisse.